(19)

Europäisches Patentamt
European Patent Office
Office européen des brevets

(11) **EP 1 286 203 A2**

(12) **EUROPEAN PATENT APPLICATION**

(43) Date of publication: **26.02.2003 Bulletin 2003/09**

(51) Int Cl.[7]: **G02F 1/1333**

(21) Application number: **02018482.6**

(22) Date of filing: **16.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **16.08.2001 JP 2001247210**

(71) Applicant: **FUJI PHOTO FILM CO., LTD.**
**Kanagawa (JP)**

(72) Inventor: **Taguchi, Keiichi**
**Minami Ashigara-shi, Kanagawa (JP)**

(74) Representative: **HOFFMANN - EITLE**
**Patent- und Rechtsanwälte**
**Arabellastrasse 4**
**81925 München (DE)**

(54) **Liquid crystal display and method of making the same**

(57) A liquid crystal display which comprises: a liquid crystal cell comprising a pair of substrates and a nematic liquid crystal layer sealed in between the pair of substrates, the substrate having an alignment layer and a transparent electrode; a quarter-wave plate comprising at least one polymer film; and a polarizing plate, wherein an angle of an orientation vector of the nematic liquid crystal in relation to the substrate varies with a voltage applied to the cell, and the quarter-wave plate and the polarizing plate are those cut out of a roll of a laminate obtained by bonding a roll of a quarter-wave plate and a roll of a polarizing plate, an absorption axis of which makes 45° with a longitudinal direction of the polarizing plate.

*FIG. 4*

(c)
(b)
(a)
An
56
58
| L1 – L2 |
Ax
54
Ay
Y
W
90°
52
θ
A5
A4
A3
A2
A1
(57)
55
X
51
Cx
(58')
53
Cn
C5
C4
C3
C2
C1
B1
(57')



Printed by Jouve, 75001 PARIS (FR)

## Description

### FIELD OF THE INVENTION

This invention relates to a liquid crystal display (R-LCD) such as a transmissive liquid crystal display, a reflective liquid crystal display and a transflective liquid crystal display which has characteristics of both the transmissive type and the reflective type or an organic light-emitting element display, particularly one having a liquid crystal cell capable of bend alignment, especially one assembled by using a polarizer prepared from a roll of a continuous polarizer with its absorption axis making an oblique angle with the longitudinal direction; and a method of making the same.

### BACKGROUND OF THE INVENTION

LCDs with great advantages of thinness, lightweight, and low power consumption have been supplanting cathode ray tube displays (CRTs) what have been leading displays of official automation equipment, such as word processors and desktop personal computers. Most of currently spread LCDs use twisted nematic (TN) liquid crystals. TN display systems are roughly divided into a birefringence mode and an optical rotation mode.

LCDs using a birefringence mode show liquid crystal molecular alignment with a high twist angle exceeding 90°. Having steep electro-optic characteristics, birefringence mode LCDs are successful in providing large capacity display by multiplexing on a simple matrix system with no active elements typified by thin-film transistors (TFTs) and diodes. However, because LCDs of this type have disadvantages of long switching times (in the several hundreds of millisecond range) and difficulty of reaching high gradation, they have not surpassed LCDs having active elements (e.g., TFT-LCDs and metal-insulator-metal (MIM) LCDs) in display performance.

TFT-LCDs and MIM-LCDs utilize an optical rotation mode in which liquid crystal molecular alignment shows a twist angle of 90°. Compared with other modes, this display mode is the most promising because of its short switching times (in the several millisecond range) and high display contrast. However, in nature of the display mode using twisting nematic liquid crystals, TFT-LCDs and MIM-LCDs involve the problem of viewing angle dependence of color or contrast, still being behind CRTs in display performance.

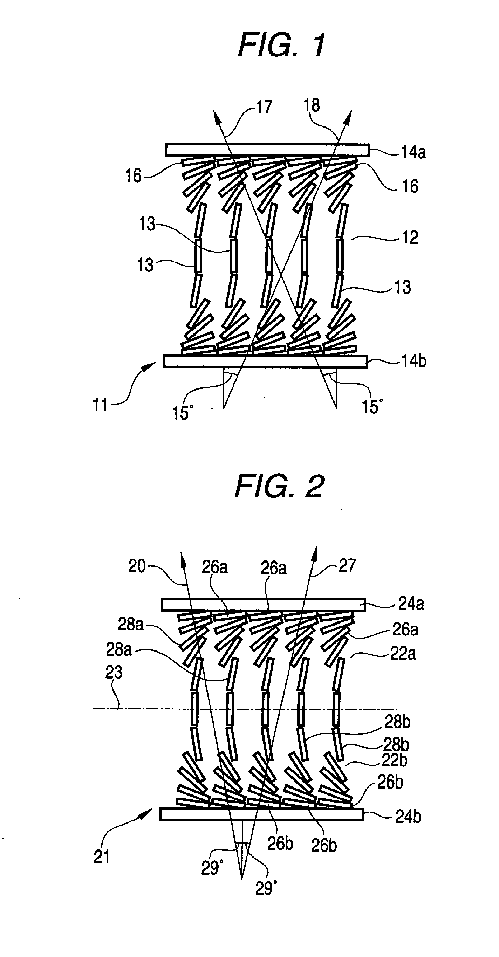

Fig. 1 is an enlarged cross-section of a liquid crystal cell of a TN LCD. The liquid crystal cell has a liquid crystal layer 12 (composed of director domains which are asymmetrical about a center plane) formed between a pair of substrates 14a and 14b with respective transparent electrodes. The director (a unit vector of orientation of molecules, usually a major axial direction of the rod-shaped molecules, in a domain) of domains in contact with the substrates is called a surface contact director 16. All the other directors are called bulk directors 13. The birefringence and light transmission at each position in the liquid crystal cell 11 are functions of the angle between incident light rays and the directors near the light pass. The least birefringence occurs when light proceeds parallel with near directors, while the greatest birefringence occurs with light proceeding perpendicularly to the near directors. For example, a light ray 18 at an incidence angle of +15° shows the least effective birefringence because the direction of the light 18 is almost parallel with the majority of directors 13 and 16. On the other hand, a light ray 17 at an incidence angle of -15° exhibits the greatest effective birefringence because the direction of the light 17 is non-parallel with the majority of directors 13 and 16.

Increase of birefringence necessarily results in increase of retardation, which leads to color and contrast variations dependent on a viewing angle.

Placing a phase retarder (optical compensator) between the polarizing plate and the TN liquid crystal cell is a conceivable manipulation for reducing the above-mentioned viewing angle dependence, i.e., to widen the viewing angle. Various optical compensators have been proposed. Use of an optical compensator has brought about viewing angle widening to some extent but not to an extent that makes users think about switchover to CRTs.

In recent years, liquid crystal cells essentially having wide viewing angle capabilities have been proposed, e.g., in JP-A-7-84254 (the term "JP-A" as used herein means an "unexamined published Japanese patent application"), *Flat Panel Displays* (1995), pp. 150-154, and U.S. Patent 5,410,422. These liquid crystal cells show symmetrical bend alignment of molecules as enlargedly illustrated in Fig. 2. The liquid cell of Fig. 2 has a liquid crystal layer composed of "self-compensating" director regions 22a and 22b between a pair of substrates 24a and 24b with respective transparent electrodes. The director regions 22a and 22b are symmetrical about the center plane 23 of the liquid crystal layer. The director regions 22a and 22b have respective surface contact directors 26a and 26b and respective bulk directors 28a and 28b. With a voltage applied between the substrates 24a and 24b each having a transparent electrode to maintain the self-compensating director regions 22a and 22b, a light ray 27 at an incidence angle of +29° shows the least effective birefringence (i.e., the least retardation) in the director region 22a because the direction of the light 27 is almost parallel with the majority of directors 26a and 28a in this region, while it exhibits the greatest effective birefringence (i.e., the greatest retardation) in the director region 22b because the direction of the light 27 is non-parallel with the majority of directors 26b and 28b. That is, the effective birefringence of light 27 at an incidence angle of 29°

is small in the director region 22a and large in the director region 22b. Accordingly, the effective birefringence as a whole is not so influenced by the change of incidence angle of light. The same effects are observed with a light ray 20 incident at an angle of -29°.

As described above, a liquid crystal cell containing liquid crystals capable of bend alignment (hereinafter referred to as a bend alignment cell) is a symmetric cell and essentially assures a widened viewing angle. However, the birefringence must be compensated for. *Flat Panel Display* (1995) , pp. 150-154 and U.S. Patent 5,410,422 refer to use of anegative birefringence compensator or a biaxially stretched polymer film.

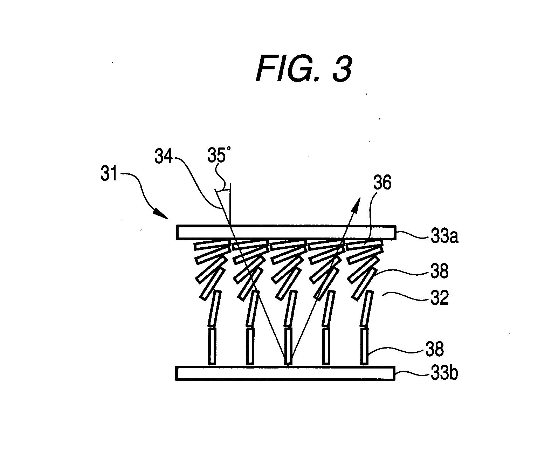

Hybrid-alignednematic (HAN) mode liquid crystal cells, which are application of the above-described principle of bend alignment to R-LCDs, have been proposed as reported in 1995 Spring JSAP (The Japan Society of Applied Physics) Annual Meeting 29a-SZC-20. The HAN mode liquid crystal cells utilize the upper half of the above-illustrated bend alignment (i.e., the director region 22a). An enlarged cross-section of the HAN mode liquid crystal cell is shown in Fig. 3. A director region 32 is formed between a pair of substrates 33a and 33b each having a transparent electrode. The director region 32 has surface contact directors 36 and bulk directors 38. A light ray 34 incident at 35° exhibits the greatest birefringence while passing through the cell 31 because it is almost non-parallel with the majority of the directors 36 and 28 and reflected on the substrate 33b. The reflected light 35 shows a smaller birefringence because it is parallel to some extent with the majority of the directors 36 and 38. The effective birefringence of the light 34 and the reflected light 34 is similar to that obtained with the above-mentioned bend alignment liquid crystal cell.

Such HAN liquid crystal cells are frequently used in combination with a quarter-wave plate and a polarizing plate. A quarter-wave plate and a polarizing plate are bonded together with the in-plane slow axis of the quarter-wave plate and the transmission axis of the polarizing plate making an angle of substantially 45°. Therefore, either one of the quarter-wave plate in roll form and the polarizing plate in roll form should be blanked to size at an oblique angle of 45° with the longitudinal direction. Oblique blanking leaves much edge trimmings as waste. Inparticular, blanking to large sizes results in reduced yield and increased waste. Further, it is laborious to bond the quarter-wave plate and the polarizing plate for each cut sheet. Additionally, the protective film of a polarizing plate usually has a thickness of 40 to 80 µm, and the laminate of the quarter-wave plate and the polarizing plate reaches a total thickness of 200 µm or more. Furthermore, there has been involved the step of superposing a plurality of films with accurate angular registration. Should the angle be out of registration, light leakage occurs along edges, which makes black color display yellowish or bluish.

Several methods for inclining the orientation axis of polymer molecules at a desired angle with respect to the machine direction have been proposed. JP-A-12-9912 discloses a method in which a plastic film is stretched in either the length or width direction (firstdirection) while being stretched in the other direction (second direction) at speeds different between opposing ends of the second direction thereby inclining the orientation axis to either side of the first direction. JP-A-3-182701 proposes a method of producing a stretched film having the stretching axis making an arbitrary angle θ with the film running direction by means of a mechanism which has a plurality of pairs of film gripping means disposed on both lateral edges of a running film, each pair making an angle θ with the film running direction so that the pairs of film gripping means stretch the film to the direction θ as the film runs. JP-A-2-113920 teaches a method of stretching a film in the direction oblique to the longitudinal direction in which a film runs as clamped at both lateral edges by a pair of chucks running on tenter rails which are disposed so as to make the paired chucks travel different distances in a prescribed running zone.

These known stretching techniques involve making a difference in running speed between lateral edges of a polymer film, which tends to produce stretched film with wrinkles or distortion that is unsuitable for use in polarizing plates. Besides, these techniques have difficulty in obtaining a desired oblique angle (45°).

## SUMMARY OF THE INVENTION

The present inventors have studied on possibility of omitting the labor for blanking and bonding at an oblique angle of 45° in the production of a polarizing plate and a quarter-wave plate which are used in R-LCDs, particularly in combination with bend alignment cells, especially HAN mode cells. As a result, they have found that the outstanding problems of conventional techniques are settled by bonding a polarizing plate and a quarter-wave plate both from the respective rolls with the absorption axis of the polarizing plate inclined.

An object of the present invention is to improve yield and to decrease waste in the production of a polarizing plate and a quarter-wave plate which are used in R-LCDs, particularly in combination with bend alignment cells, especially HAN mode cells, thereby to provide thinner R-LCDs with good productivity.

Another object of the invention is to provide an LCD which suffers from less light leakage due to angular misregistration in bonding an unrolled quarter-wave plate and an unrolled linear polarizing plate at an oblique angle.

Still another object of the invention is to provide a method of making the LCD.

The above objects of the present invention are accomplished by:

(1) A liquid crystal display which comprises a liquid crystal cell composed of a pair of substrates with a transparent electrode having an alignment layer on the surface thereof and at least a nematic liquid crystal layer sealed in between the pair of substrates, a quarter-wave plate composed of at least one polymer film, and a polarizing plate, and in which the angle of the orientation vectors of the nematic liquid crystals with the substrates varies with a voltage applied to the cell, wherein

the quarter-wave plate and the polarizing plate are those cut out of a roll of a laminate obtained by bonding a roll of a quarter-wave plate and a roll of a polarizing plate the absorption axis of which makes 45° with the longitudinal direction of the polarizing plate.

(2) A liquid crystal display which comprises a liquid crystal cell composed of a pair of substrates with a transparent electrode having an alignment layer on the surface thereof and at least a nematic liquid crystal layer sealed in between the pair of substrates, a quarter-wave plate composed of at least one polymer film, and a polarizing plate, and in which the nematic liquid crystal layer shows bend alignment, and the angle of the orientation vectors of the nematic liquid crystals with the substrates varies with a voltage applied to the cell, wherein

the quarter-wave plate and the polarizing plate are those cut out of a roll of a laminate obtained by bonding a roll of a quarter-wave plate and a roll of a polarizing plate the absorption axis of which makes 45° with the longitudinal direction of the polarizing plate.

(3) A liquid crystal display according to (1) or (2) above, wherein the polarizing plate comprises a polarizing film having a protective film adhered to at least one side thereof, the slow axis of the protective film and the absorption axis of the polarizing film making an angle of substantially 45°.

(4) A liquid crystal display according to (1), (2), (3) or (4), wherein the polarizing plate is prepared by gripping both edges of a continuously fed polyvinyl alcohol film with gripping means, moving the gripping means in the longitudinal direction of the film while giving tension to the film thereby stretching the film.

(5) A liquid crystal display according to (4) above, wherein the polarizing plate is prepared by stretching a continuously fed polyvinyl alcohol under the condition that a travel distance L1 of the gripping means on one edge of the film from a substantial gripping starting position to a substantial release position, a travel distance L2 of the gripping means on the other edge of the film from a substantial gripping starting position to a substantial release position, and a distance W between the two substantial release positions satisfy relationship (1):

$$|L2-L1|>0.4W$$

and that the polyvinyl alcohol film while being stretched has a volatile fraction of 5% or more and exhibits self-supporting properties as a film and then shrinking the stretched film to reduce the volatile fraction.

(6) A liquid crystal device according to (5) above, wherein the polarizing plate is prepared by once stretching a polyvinyl alcohol film with a volatile fraction of 10% or more to a stretch ratio of 2 to 10 and then shrinking the stretched film to a shrinkage percentage of 10%, and a transmission axis of the polarizing plate makes 35° to 55° with a longitudinal direction of the film..

(7) A liquid crystal display according to any one of (1) to (6) above, which further has an optical compensator between the liquid crystal cell and the polarizing plate.

(8) A liquid crystal display according to any one of (1) to (7) above, which further has an antireflection layer.

(9) A liquid crystal display according to any one of (1) to

(8) above, which is a transmissive liquid crystal display, a reflective liquid crystal display or a transflective liquid crystal display.

(10) An organic light-emitting element display comprising:

a substrate; a transparent electrode; at least one organic compound layer comprising a light-emitting layer; a back plate;

a quarter-wave plate comprising at least one polymer film; and a polarizing plate, wherein the quarter-wave plate and the polarizing plate are those cut out of a roll of a laminate obtained by bonding a roll of a quarter-wave plate and a roll of a polarizing plate, an absorption axis of which makes 45° with a longitudinal direction of the polarizing plate.

(11) A method for making a liquid crystal display which comprises : a liquid crystal cell comprising a pair of substrates and a nematic liquid crystal layer sealed in between the pair of substrates, the substrate having an alignment layer and a transparent electrode; a quarter-wave plate comprising at least one polymer film; and a polarizing plate, wherein an angle of an orientation vector of the nematic liquid crystal in relation to the substrate varies with a voltage applied to the cell, the method comprising: bonding a roll of a quarter-wave plate and a roll of a polarizing plate with an absorption axis of the polarizing plate making 45° with a longitudinal direction of the resulting laminate;

cutting the laminate to size; and bonding a quarter-wave plate side of the cut sheet of the laminate to the liquid crystal cell.

(12) A method according to (11) above, further comprising:

forming the polarizing plate which comprises a polarizing film and a protective film, wherein a slow axis of the protective film and an absorption axis of the polarizing film making an angle of substantially 45°.

(13) A method according to (11) or (12) above, further comprising: gripping both edges of a continuously fed polyvinyl alcohol film with gripping means; moving the gripping means in a longitudinal direction of the film while giving tension to the film thereby stretching the film so as to prepare the polarizing plate.

(14) A method according to any one of (11) to (13) above, further comprising: gripping both edges of a continuously fed polyvinyl alcohol film with gripping means; stretching a continuously fed polyvinyl alcohol under a condition that a track length L1 of one of the gripping means on one edge of the film from a substantial gripping starting position to a substantial release position, a track distance L2 of the other of the gripping means on the other edge of the film from a substantial gripping starting position to a substantial release position, and a distance W between the two substantial release positions satisfy the following relationship (1):

$$|L2-L1| > 0.4W \qquad (1)$$

and that the polyvinyl alcohol film while being stretched has a volatile fraction of 5% or more and exhibits self-supporting properties as a film; and shrinking the stretched film so as to reduce the volatile fraction.

(15) A method according to any one of (11) to (14) above claim, further comprising: stretching a polyvinyl alcohol film with a volatile fraction of 10% or more to a stretch ratio of 2 to 10; and shrinking the stretched film to a shrinkage percentage of 10% to prepare the polarizing plate, a transmission axis of which makes 35° to 55° with a longitudinal direction of the film.

(16) A method according to any one of (11) to (15) above, further comprising: disposing an optical compensator so that the liquid crystal cell, the optical compensator and the polarizing plate are in that order.

(17) A method according to any one of (11) to (16) above, further comprising: disposing an antireflection layer.

(18) A method according to any one of (11) to (17) above, wherein the liquid crystal display is a transmissive liquid crystal display, a reflective liquid crystal display or a transflective liquid crystal display.

(19) A method for making an organic light-emitting element display which comprises: a substrate; a transparent electrode; at least one organic compound layer comprising a light-emitting layer; a back plate; a quarter-wave plate comprising at least one polymer film; and a polarizing plate, the method comprising: bonding a roll of a quarter-wave plate and a roll of a polarizing plate, an absorption axis of which makes 45° with a longitudinal direction of the polarizing plate so as to obtain a roll of a laminate; and cutting out of the roll of a laminate.

## BRIEF DESCRIPTION OF THE DRAWING

Fig. 1 is an enlarged cross-section of a liquid crystal cell of a twisted nematic liquid crystal display.

Fig. 2 is an enlarged cross-section of a liquid crystal cell containing liquid crystals capable of symmetric bend alignment, which is used in flat panel displays.

Fig. 3 is an enlarged cross-section of a hybrid-aligned nematic mode liquid crystal cell.

Figs. 4 through 9 are each a plan view schematically showing a method for obliquely stretching a polymer film.

Fig. 10 illustrates a blanking configuration of a polarizing plate in a conventional manner.

Fig. 11 illustrates a blanking configuration of a quarter-wave plate/polarizingplate laminate used in the present invention.

Fig. 12 illustrates a blanking configuration of a basic structure of an R-LCD of the present invention.

## DETAILED DESCRIPTION OF THE INVENTION

[I] Liquid crystal cell

The liquid crystal cell is generally composed of a pair of substrates with a transparent electrode having on the surface thereof an alignment layer and a nematic liquid crystal layer sealed in between the substrates. In making a bend alignment cell, liquid crystals capable of bend alignment in a cell with a voltage applied are usually selected.

Nematic liquid crystals change the angle of orientation vectors with respect to the substrates with the applied voltage. In general, the angle of orientation vectors with the substrates increases to reduce the birefringence with an increase of the applied voltage, and the changes in birefringence provide an image.

The nematic liquid crystals used in the HAN mode R-LCD of the present invention are generally those capable of hybrid alignment on voltage application. The HAN mode is well known in the field of LCDs. As shown in Fig. 3, the HAN mode configuration is such that the lower substrate is at a position corresponding to the centerline of a bend alignment cell. The alignment layer of the lower substrate is capable of homeotropically aligning nematic liquid crystals. Such an alignment layer includes inorganic deposit layers, surface active agent layers, and organosilane layers.

[II] Polarizing plate

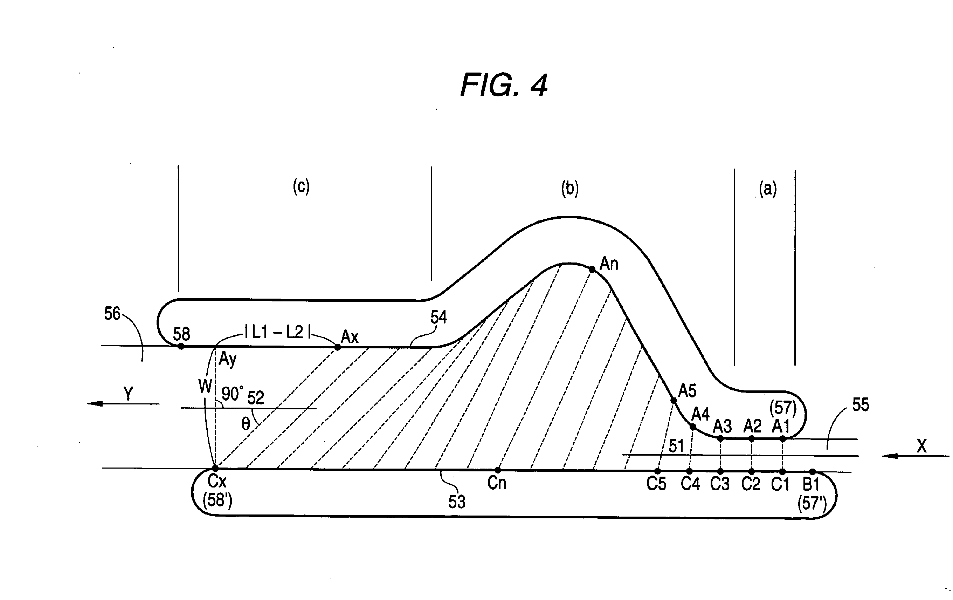

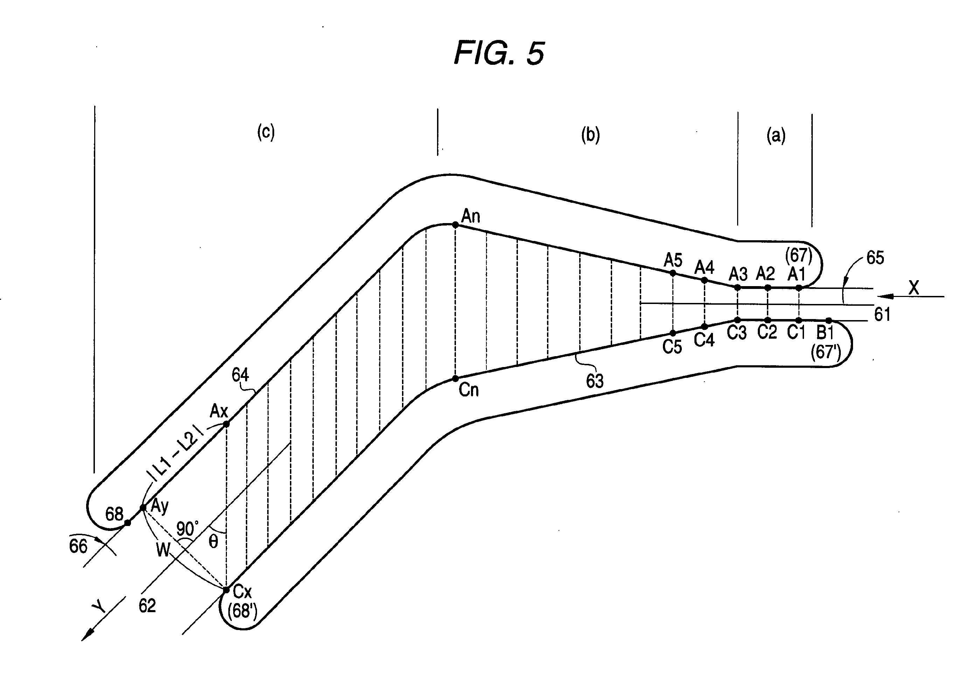

The polarizing plate in roll form whose absorption axis makes an oblique angle of 45° with the longitudinal direction will be described with reference to Figs. 4 and 5, in which a method for obliquely stretching a polymer film is schematically illustrated.

The stretching method includes the steps of introducing an unrolled continuous film in the direction indicated by arrow X (the step is indicated by (a)), laterally stretching the film (the step is indicated by (b)), and sending the stretched film to the next step in the direction indicated by arrow Y (the step is indicated by (c)). The term "stretching step" will be used to include the steps (a), (b), and (c).

Film is continuously led in direction X and gripped by a gripping means first at a position B1 on the left-hand side when seen from the upstream (the same representation of the two sides (edges) of the running film will be usedhereunder). At this time point, the right-hand side of the film being free, there is no tension created in the width direction. In other words, point B1 is not regarded as a substantial starting position of gripping (hereinafter referred to as a substantial gripping starting position).

A substantial gripping starting position is defined to be a position where both film edges are held for the first time. The substantial gripping starting position is represented by (1) gripping starting position A1 positioned downstream of point B1 on the right-hand side of the film and (2) point C1, the intersection of a vertical from A1 perpendicular to the centerline 51 (in Fig. 4) or 61 (in Fig. 5) of the film being introduced and the track 53 (Fig. 4) or 63 (Fig. 5) of the gripping means on the opposite side.

Started from A1 and C1, the gripping means on both sides are moved at substantially the same speed, whereupon the gripping means at A1 moves to A2, A3, ... An for each unit time, and the gripping means at C1 similarly moves to C2, C3, ... Cn. The straight line connecting points An and Cn at which reference gripping means pass at the same time point represents the direction of stretching at that time point.

According to this method, because An gradually falls behind Cn as shown in Figs. 4 and 5, the stretching direction is gradually slanted from a vertical of the film running direction. A position where the film is substantially released from the gripped state (hereinafter referred to as a substantial release position) is represented by (1) point Cx at which the film is released from the gripping means on the left-hand side and (2) point Ay, the intersection of a vertical from Cx perpendicular to the centerline 52 (in Fig. 4) or 62 (in Fig. 5) of the film being forwarded to the next step and the track 54 (Fig. 4) or 64 (Fig. 5) of the gripping means on the opposite side.

The final angle of the stretching direction is decided by the ratio of (1) the difference in travel between the paired gripping means at the substantial end point of the stretching step (i.e., the substantial gripping release position), Ay-Ax (i.e., |L1-L2|) to (2) the distance W between Cx and Ay, i.e., the width of the film at the substantial gripping release position. Accordingly, the oblique angle θ of the stretching direction with respect to the film running direction toward the next step is defined by equation:

$$\tan\theta = W/\ (Ay - Ax) = W/|L1 - L2|$$

(Track length L1: one of the gripping means on one edge of the film from a substantial gripping starting position to a substantial release position; Track distance L2: the other of the gripping means on the other edge of the film from a substantial gripping starting position to a substantial release position)

Although the right-hand side edge of the film keeps caught after it passes through point Ay up to point 58 (Fig. 4) or 68 (Fig. 5) , transverse stretching force is no more exerted because the other edge is free. Therefore, point 58 or 68 is not regarded as a substantial gripping release position.

The substantial gripping starting position on each side edge of the running film is not equal to the position at which the gripping means on each side catches the film. The above-defined substantial gripping starting position is more strictly defined to be the most upstream position where the straight line connecting the paired gripping points is crossing the centerline of the film being introduced at approximately right angles. Likewise, the above-defined substantial gripping release position is more strictly defined to be the most downstream position where the straight line

connecting the paired gripping points is crossing the centerline of the film being forwarded to the next step at approximately right angles.

The language "crossing at approximately right angles" as used herein means that the film's centerline and the line representing the substantial gripping starting position or the line representing the substantial gripping release position make an angle of 90±0.5°.

In making a difference in travel between both edges by use of a tenter type stretching machine, mechanical restrictions, such as rail lengths, can often cause a considerable difference between the position where gripping means grip the film and a substantial gripping starting position or between the position where the gripping means release the film and a substantial gripping release position. Anyhow, the intended object is accomplished as long as the step between the above-defined substantial gripping starting position and the above-defined substantial gripping release position satisfies relationship (1):

$$|L1-L2|>0.4W \quad (1)$$

The oblique angle of the orientation axis in the resulting stretched film can be controlled by adjusting the ratio of the film width W at the outlet of step (c) to the difference in substantial travel between the paired gripping means, |L1-L2|.

The polarizing film used in the invention is required to have the orientation axis at an angle of 45° with the longitudinal direction. To obtain an orientation angle as close to 45° as possible, it is desirable that relationship (2), particularly relationship (3), be satisfied:

$$0.9W<|L1-L2|<1.1W \quad (2)$$

$$0.97W<|L1-L2|<1.03W \quad (3)$$

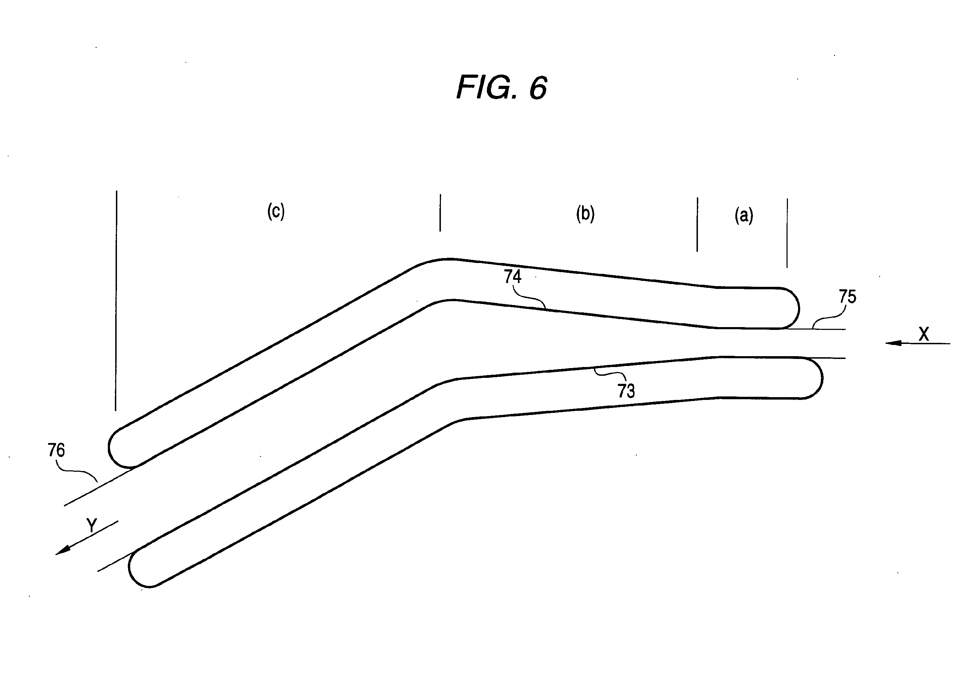

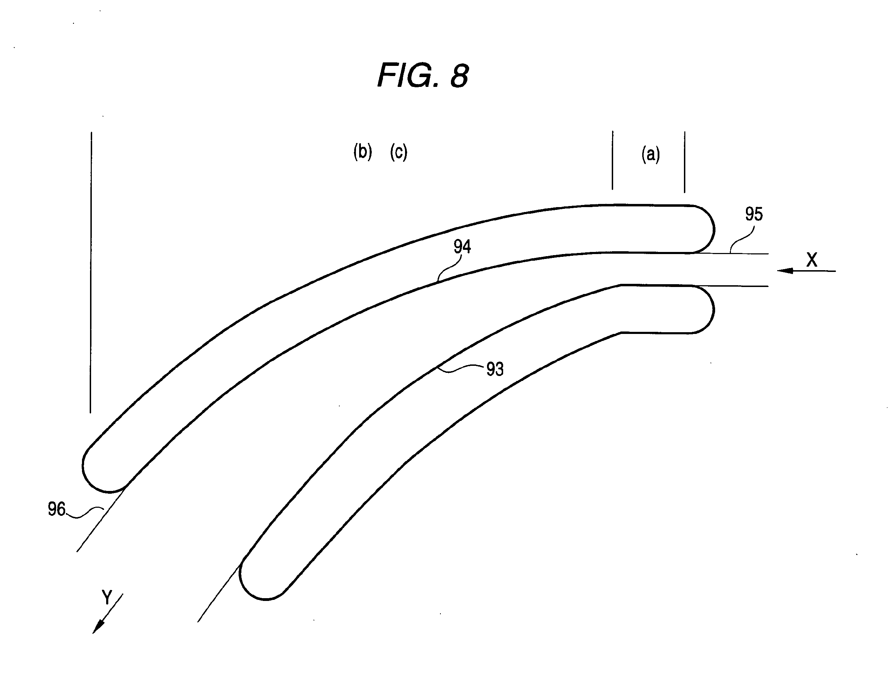

The mechanism for carrying out the stretching step can be designed arbitrarily taking equipment cost and productivity into account. Conceivable configurations of the mechanism are shown in Fig. 4 through 9.

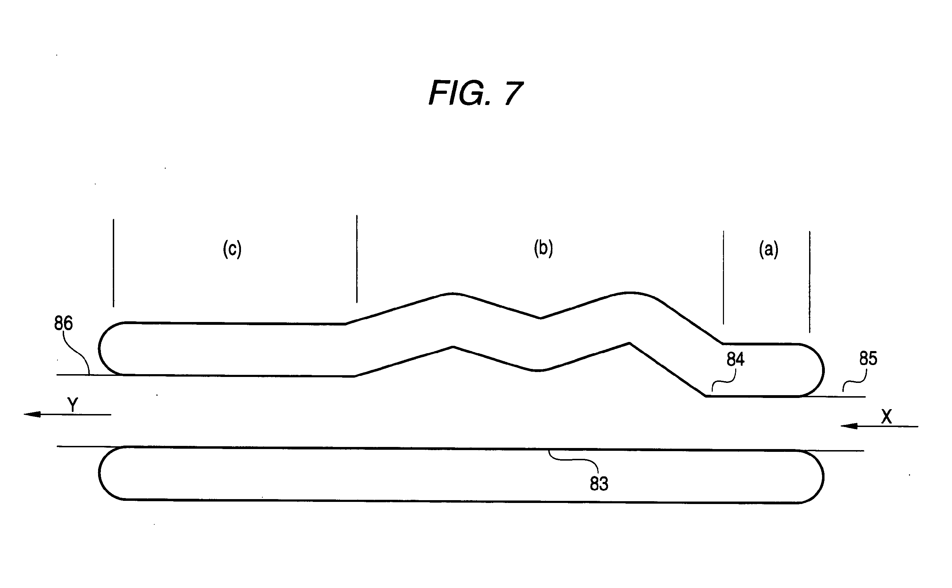

The angle between direction X (along which film is led to the stretching step) and direction Y (along which film is sent to the next step) is arbitrary. A smaller angle is advantageous to minimize the space occupied by the whole apparatus including the steps before and after the stretching step. The angle is preferably within 3°, still preferably within 0.5°. The configurations shown in Figs. 4 and 7 are examples that satisfy the preference.

With the film running direction virtually unchanged as in Figs. 4 and 7, it is difficult to obtain an orientation angle of 45° with respect to the longitudinal direction, which is preferred for a polarizing film used in the invention, simply by extending the distance between gripping means. Hence, it is a preferred manipulation that the film is once stretched out and then shrunken as shown in Fig. 4 thereby to make |L1-L2| larger. In this case, the stretch ratio is preferably 1.1 to 10.0, still preferably 2 to 10, and the following shrinkage percentage is preferably 10% or more. It is also a preferred manipulation to repeat stretch and shrinkage as shown in Fig. 7 to make |L1-L2| larger.

The smaller the number of bends and the bend angle of the rail for the gripping means, the better for minimizing the equipment cost for the stretching step. From this viewpoint, it is preferred to bend the running direction of the film while being held at both edges thereof so that the angle between the film running direction at the outlet of the film gripping step and the substantial orientation direction of the film may fall within a range of 20 to 70° as illustrated in Figs. 5, 6, and 8.

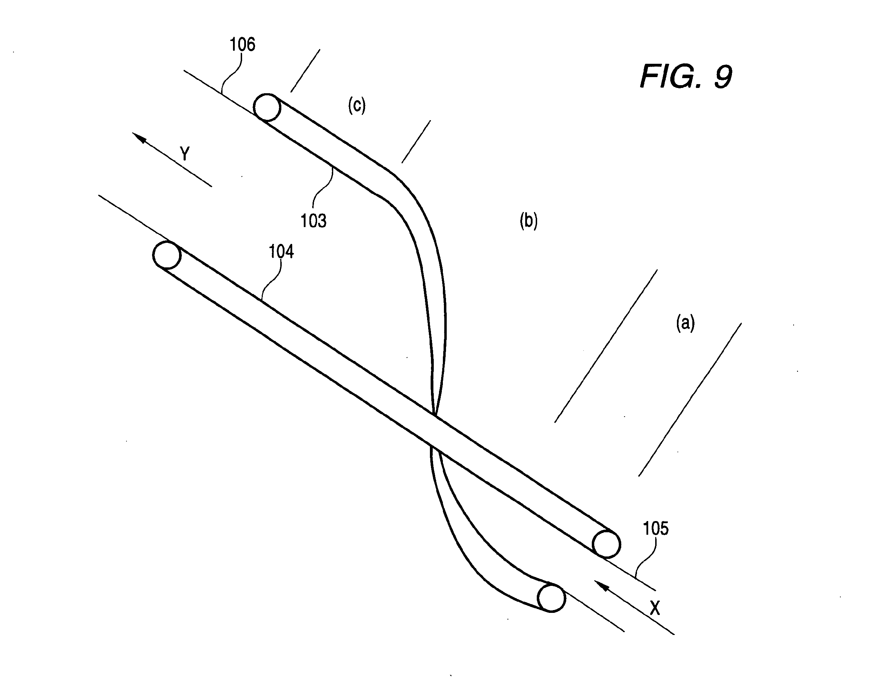

A tenter as it is called as shown in Figs. 4 through 8 is preferably used as an apparatus for stretching a continuous film by gripping both edges under tension. In addition to conventional two-dimensional tenters, an apparatus in which the gripping means on both edges make a travel difference in helix as shown in Fig. 9 can also be used.

A tenter type stretching machine often comprises a pair of chains fitted with clips and carried on tracks along rails. Where the tentering configuration is asymmetric, it may follow that the end positions of the two rails at the inlet and the outlet of the stretching step differ from each other as in the configurations shown in Figs. 4 and 5, in which cases the gripping means on both sides do not grip or release the film simultaneously. Therefore, each of the substantial track lengths L1 and L2 does not indicate the distance from a point where the respective clip grips one edge to a point where the clip releases that edge but the distance the respective clips travel while the film is gripped from both sides.

The traveling speeds at both film edges are required to be substantially equal. A difference in the traveling speeds at the outlet of the stretching step would cause wrinkling or distortion at the outlet of the stretching step. The difference is desirably not more than 1%, more desirably less than 0.5%, most desirably less than 0.05%. The traveling speed as referred to herein denotes the length of the track a gripping means on each side travels per minute. General

tenter type stretching machines inevitably involve speed unevenness in a less than second range depending on the period of chain-driving sprockets, the frequency of the driving motor, etc., which often results in speed fluctuation of a few percentages. This kind of speed fluctuation is different from the above-identified difference in traveling speed.

According as the difference in travel between both sides, the film is liable to undergo wrinkling or distortion. To overcome this problem, the present invention provides a preferred embodiment in which a polymer film is stretched while it has a volatile fraction of 5% or more as long as its own supporting properties is maintained and then shrunken to reduce the volatile fraction. A polymer film with a volatile content is prepared by casting a polymer solution to form a cast film containing a solvent or water or by applying a solvent or water by immersion, spread coating or spraying either before or during stretching. Film of a hydrophilic polymer such as polyvinyl alcohol (PVA), which absorbs moisture in a high humidity condition, can gain a volatile content by exposure to a high humidity condition either before or during stretching. Any other means for assuring a volatile content of 5% or more is employable.

A preferred volatile fraction varies according to the kind of the polymer. The volatile fraction may be as high as is consistent with the film's self-supporting properties. For example, a preferred volatile fraction of a PVA film is 10 to 100%, and that of a cellulose acylate film is 10 to 200%.

The stretched polymer film can be shrunken either during or after the stretching step by, for example, removing the volatile content under heat application or any other means.

Thus, in a particularly preferred embodiment of the present invention, the stretching is carried out under the following conditions:

(i) The film is stretched 1.1 to 20.0 times at least in the transverse direction;
(ii) The difference in longitudinal traveling speed between the gripping means on both sides of the film is within 1%;
(iii) The running direction of the film is bent while being held at both edges thereof so that the angle between the film running direction at the outlet of the film gripping step and the substantial orientation direction of the film may fall within a range of 20 to 70°; and
(iv) The film while being stretched has a volatile fraction of 5% or more and exhibits self-supporting properties as a film, and the stretched film is shrunken to reduce the volatile fraction.

The rail regulating the track of a gripping means is in some cases required to have a large bend angle. In order to avoid mutual interference of the gripping means or local stress concentration, the rail is desirably designed so that the track of the gripping means depicts an arch at the bend.

The film thickness before stretching is preferably, but not limited to, 1 μm to 1 mm, particularly 20 to 200 μm, from the standpoint of gripping stability and stretch uniformity.

A polarizing film whose absorption axis has an oblique angle of 40 to 50°, particularly 44 to 46°, with the longitudinal direction is preferably used in the present invention.

While the polymer making the polarizing film is not particularly limited, PVA is the most suited. PVAs, which are usually prepared by saponifying polyvinyl acetate, may comprise other components copolymerizable with vinyl acetate, such as unsaturated carboxylic acids, unsaturated sulfonic acids, olefins, and vinyl ethers. Modified PVAs containing an acetoacetyl group, a sulfonic acid group, a carboxyl group, an oxyalkylene group, etc. are also useful.

While not limiting, the degree of saponification of PVA is preferably 80 to 100 mol%, still preferably 90 to 100 mol%, in view of solubility and the like. While not limiting, the degree of polymerization of PVA is preferably 1,000 to 10,000, still preferably 1,500 to 5,000.

A polarizing film is obtained by dyeing a PVA film either before or after stretching. The dyeing is executed through vapor phase or liquid phase adsorption by an arbitrary means, for example, immersion in an iodine-potassium iodide aqueous solution or spread coating or spraying with an iodine solution or a dye solution. For example, liquid phase dyeing with iodine is conducted by immersing a PVA film in an iodine-potassium iodide aqueous solution which preferably contains 0.1 to 20 g/l of iodine and 1 to 100 g/l of potassium iodide at an iodine/potassium iodide weight ratio of 1 to 100. The immersion is preferably effected at a liquid temperature of 5 to 50°C for 30 to 5,000 seconds. The above-described stretching step is preferably preceded by the dyeing step because the film is swollen by the dye and becomes ready to be stretched.

Dichroic dyes are also used preferably. Suitable dichroic dyes include azo dyes, stilbene dyes, pyrazolone dyes, triphenylmethane dyes, quinoline dyes, oxazine dyes, thiazine dyes, and anthraquinone dyes. Water-soluble ones are preferred. The dichroic dye preferably contains a hydrophilic substituent, such as a sulfonic acid group, an amino group, and a hydroxyl group. Examples of useful dichroic dyes are C.I. Direct Yellow 12, C.I. Direct Orange 39, C.I. Direct Orange 72, C.I. Direct Red 39, C.I. Direct Red 79, C.I. Direct Red 81, C.I. Direct Red 83, C.I. Direct Red 89, C.I. direct Violet 48, C.I. Direct Blue 67, C.I. Direct Blue 90, C.I. direct Green 59, and C.I. AcidRed37. The dyes described in JP-A-1-161202, JP-A-1-172906, JP-A-1-172907, JP-A-1-183602, JP-A-1-248105, JP-A-1-265205, and JP-A-7-261024 are useful as well. These diohroic dyes are used in the form of a free acid or a salt with an alkali metal, ammonium or an amine. A combined use of two or more of the dichroic dyes provides a polarizer with various hues.

In particular, a polarizer containing a compound (dye) or a combination of dichroic dyes selected to assume black when paired with the polarizing axes crossing at right angles is preferred for its high transmission percentage and high polarization percentage.

In stretching a PVA film, an additive for crosslinking PVA (crosslinking agent) is used preferably. Where, in particular, a PVA film is stretched obliquely as in the present invention, the orientation direction could be deviated under tension at the outlet of the stretching step unless the PVA has hardened by that time. A crosslinking agent solution can be applied by dip coating or spread coating before or during the stretching step. Useful crosslinking agents are described in U.S. Patent Reissue 232897. Boric acid compounds are especially preferred.

The above-described stretching technique of the present invention is also preferably applied to the production of polyvinylene type polarizing films which provide polarized light through conjugated double bonds. The polyvinylene structure is obtained by dehydration of PVA or dehydration and dechlorination of polyvinyl chloride.

A protective film is bonded to one or both sides of the polarizing film thus prepared to provide a polarizing plate. Materials of the protective film include, but are not limited to, cellulose esters, such as cellulose acetate, cellulose acetate butyrate, and cellulose propionate, polycarbonates, polyolefins, polystyrenes, and polyesters. If a protective film has a retardation exceeding a certain level, linearly polarized light would be changed to elliptically polarized light since the polarization axis of the polarizing film and the orientation axis of the protective film are oblique to each other. It is therefore desirable for the protective film to have as low a retardation as possible, for example not more than 10 nm, particularly not more than 5 nm, at a wavelength of 632.8 nm. In this connection, cellulose triacetate (CTA) is an especially preferred polymer material for the protective film. Polyolefins, such as Zeonex or Zeonor (available from Zeon Corp.) and Arton (from JSR Corp.), are also preferred. Non-birefringent optical resin materials described in JP-A-8-110402 and JP-A-11-293116 are also useful.

It is desirable that the angle between the slow axis of the protective film and the absorption axis of the polarizing film be substantially 45°.

The adhesive which can be used to bond the polarizing film and the protective film includes, but is not limited to, PVA resins (including modified PVA resins containing an acetoacetyl group, a sulfonic acid group, a carboxyl group, an oxyalkylene group, etc.) and boron compound aqueous solutions, with PVA resins being preferred. The adhesive is preferably applied to a dry thickness of 0.01 to 10 μm, particularly 0.05 to 5 μm.

It is preferred for the polarizing plate to have a high transmission and a high degree of polarization for securing high display contrast. A preferred transmission is at least 30%, particularly 40% or higher, at 550 nm, and a preferred polarization degree is at lease 95.0%, particularly 99% or higher, especially 99.9% or higher, at 550 nm.

[III] Quarter-wave plate

The quarter-wave plate (hereinafter "QWP") used in the present invention should have a retardation of 120 to 160 nm measured at a wavelength of 590 nm (hereinafter $Re_{590}$). The QWP may have a single-ply structure or a multi-ply structure. A continuous single-ply polymer film, supplied in roll form, which achieves one-quarter wavelength retardation over a broad wavelength range is preferred.

Useful QWPs are found in the following publications. JP-A-5-27118 and JP-A-5-27119 disclose two-plyphase retarders composed of a birefringent film having a high retardation and a birefringent film having a low retardation bonded with their optic axes crossing at right angles. Where the difference in retardation between these two films is λ/4 over the whole visible light region, the phase retarder theoretically functions as a QWP in the whole visible region. JP-A-10-68816 proposes a two-ply phase retarder which comprises a polymer film showing λ/4 retardation at a specific wavelength and a polymer film showing λ/2 retardation at the wavelength and provides λ/4 retardation over a broad wavelength region. JP-A-10-90521 also discloses a phase retarder composed of two polymer films which can achieve λ/4 retardation over a broad wavelength range.

A QWP having a single-ply structure is especially preferred in the present invention. Such a single-ply QWP includes a polymer film having a smaller phase difference at a shorter measuring wavelength which is disclosed in JP-A-12-137116 and WO 00/26705.

A QWP that is preferably used in the invention will further be described in detail. The QWP in one embodiment has a retardation at 450 nm ($Re_{450}$) of 100 to 125 nm and a retardation at 590 nm ($Re_{590}$) of 120 to 160 nm with a difference between $Re_{590}$ and $Re_{450}$, $Re_{590}$-$Re_{450}$, being equal to or greater than 2. The difference $Re_{390}$-$R_{450}$ is still preferably ≥5 μm, particularly preferably ≥10 nm.

The QWP in another embodiment has $Re_{450}$ of 108 to 120 nm, a retardation at 550 nm ($Re_{550}$) of 125 to 142 nm, and $Re_{590}$ of 130 to 152 with a difference $R_{590}$-$R_{550}$ being equal to or greater than 2 nm. The difference $R_{590}$-$R_{550}$ is still preferably ≥5 nm, particularly preferably ≥10 nm. It is also preferred that $Re_{550}$-$Re_{450}$ be equal to or greater than 10 nm.

Retardations (Re) are calculated according to equation:

$$Re = (nx - ny) \times d$$

where nx is an in-plane refractive index in the slow axis direction (the highest in-plane refractive index); ny is an in-plane refractive index in the direction perpendicular to the slow axis direction; and d is the thickness (nm) of a QWP.

The QWP is preferably a single-ply polymer film satisfying the following formula:

$$1 \leq (nx - nz)/(nx - ny) \leq 2$$

where nx and ny are as defined above; and nz is a refractive index in the thickness direction of a QWP.

The thickness of the single-ply polymer film is preferably in a range of from 5 to 1000 μm, still preferably 10 to 500 μm, particularly preferably 40 to 200 μm, especially preferably 70 to 120 μm.

The QWP satisfying the above-mentioned optical requirements can be produced from the following materials by the following methods.

Cellulose esters are preferred materials for making the single-ply QWP. Cellulose esters with lower fatty acids are still preferred. The term "lower fatty acids" used herein denotes fatty acids having up to 6 carbon atoms. The carbon atom number of the lower fatty acid is preferably 2 (cellulose acetates) , 3 (cellulosepropionates) or 4 (cellulosebutyrates). Cellulose acetates are the most suitable. Mixed fatty acid esters, such as cellulose acetate propionate and cellulose acetate butyrate, are also employable. Cellulose acetates preferably have an average degree of acetylation of 45.0 to 62.5%, particularly 55.0 to 61.0%, especially 59.0 to 60.0%.

The polymer film can contain a retardation increasing agent to have a controlled retardation at various wavelengths. A retardation increasing agent is preferably used in an amount of 0.05 to 20 parts, particularly 0.1 to 10 parts, especially 0.2 to 5 parts, by weight per 100 parts by weight of the polymer. Two or more retardation increasing agents can be used in combination. It is desirable for the retardation increasing agent to have an absorption maximum in a wavelength region between 250 nm and 400 nm and to have substantially no absorption in the visible region.

The retardation increasing agent preferably includes compounds having at least two aromatic rings. The term "aromatic rings" as referred to herein is intended to include not only aromatic hydrocarbon rings but aromatic heterocyclic rings. The aromatic hydrocarbon ring is preferably a 6-membered ring, i.e., a benzene ring. The aromatic heterocyclic ring is generally an unsaturated heterocyclic ring, which ring is preferably a 5-, 6- or 7-membered ring, still preferably a 5- or 6-membered ring. The aromatic heterocyclic ring usually contains as many double bonds as possible. Preferred hetero atoms are nitrogen, oxygen, and sulfur atoms, with a nitrogen atom being particularly preferred. Examples of the aromatic heterocyclic ring include furan, thiophene, pyrrole, oxazole, isooxazole, thiazole, isothiazole, imidazole, pyrazole, furazane, triazole, pyrane, pyridine, pyridazine, pyrimidine, pyrazine, and 1,3,5-triazine rings.

Preferred aromatic rings are benzene, furan, thiophene, pyrrole, oxazole, thiazole, imidazole, triazole, pyridine, pyrimidine, pyrazine, and 1,3,5-triazine rings.

The number of aromatic rings possessed by the retardation increasing agent is preferably 2 to 20, still preferably 2 to 12, particularly preferably 2 to 8, especially preferably 2 to 6. Two aromatic rings in the retardation increasing agent may be linked (a) by condensation or fusion, (b) via a single bond or (c) via a linking group. Being aromatic rings, they do not form a spiro-union.

In the case (a), the condensed rings (composed of two or more aromatic rings) include indene, naphthalene, azulene, fluorene, phenanthrene, anthracene, acenaphthylene, biphenylene, naphthacene, pyrene, indole, isoindole, benzofuran, benzothiophene, indolidine, benzoxazole, benzothiazole, benzimidazole, benzotriazole, purine, indazole, chromene, quinoline, isoquinoline, quinolidine, quinazoline, cinnoline, quinoxaline, phthalazine, pteridine, carbazole, acridine, phenanthridine, xanthene, phenazine, phenothiazine, phenoxathine, phenoxazine, and thianthrene rings. Preferred of them are naphthalene, azulene, indole, benzoxazole, benzothiazole, benzimidazole, benzotriazole, and quinoline rings.

In the case (b), two aromatic rings are preferably linked via a carbon-to-carbon single bond. Two aromatic rings may be linked with an aliphatic ring or a non-aromatic heterocyclic ring inserted therebetween via the respective single bonds.

In the case (c), the linking group is preferably bonded to a carbon atom of one ring on one end and to a carbon atom of another ring on the other end. Preferred linking groups include an alkylene group, an alkenylene group, an alkynylene group, -CO-, -O-, -NH-, -S-, and appropriate combinations thereof. Examples of combinations of linking groups are shown below. In each of the examples, the order of linking groups may be reversed.

c1: -CO-O-
c2: -CO-NH-
c3: -alkylene-O-

c4: -NH-CO-NH-
c5: -NH-CO-O-
c6: -O-CO-O-
c7: -O-alkylene-O-
c8: -CO-alkenylene-
c9: -CO-alkenylene-NH-
c10: -CO-alkenylene-O-
c11: -alkylene-CO-O-alkylene-O-CO-alkylene-
c12: -O-alkylene-CO-O-alkylene-O-CO-alkylene-O-
c13: -O-CO-alkylene-CO-O-
c14: -NH-CO-alkenylene-
c15: -O-CO-alkenylene-

The aromatic rings and the linking groups may have a substituent(s), such as a halogen atom (i.e., F, C1, Br or I) , a hydroxyl group, a carboxyl group, a cyano group, an amino group, a nitro group, a sulfo group, a carbamoyl group, a sulfamoyl group, a ureido group, an alkyl group, an alkenyl group, an alkynyl group, an aliphatic acyl group, an aliphatic acyloxy group, an alkoxy group, an alkoxycarbonyl group, an alkoxy carbony lamino group, an alkylthio group, an alkylsulfonyl group, an aliphatic amide group, an aliphatic sulfonamide group, an aliphatic substituted amino group, an aliphatic substituted carbamoyl group, an aliphatic substituted sulfamoyl group, an aliphatic substituted ureido group, and a non-aromatic heterocyclic group.

The alkyl group preferably contains 1 to 8 carbon atoms . An acylic alkyl group is preferred to a cyclic alkyl group. A straight-chain alkyl group is still preferred. The alkyl group may be substituted with a hydroxyl group, a carboxyl group, an alkoxy group, an alkylamino group, etc. The (substituted) alkyl group includes methyl, ethyl, n-butyl, n-hexyl, 2-hydroxyethyl, 4-carboxybutyl, 2-methoxyethyl, and 2-diethylaminoethyl.

The alkenyl group preferably contains 2 to 8 carbon atoms. An acyclic alkenyl group is preferred to a cyclic alkenyl one. A straight-chain one is still preferred. The alkenyl group may be substituted with a vinyl group, an allyl group, a 1-hexenyl group, etc.

The alkynyl group preferably contains 2 to 8 carbon atoms. An acyclic alkynyl group is preferred to a cyclic alkynyl group. A straight-chain one is still preferred. The alkynyl group may have a substituent. Examples of the alkynyl group are ethynyl, 1-butynyl, and 1-hexynyl.

The aliphatic acyl group and the aliphatic acyloxy group preferably contain 1 to 10 carbon atoms. Examples of the aliphatic acyl group are acetyl, propanoyl, and butanoyl. Examples of the aliphatic acyloxy group include acetoxy.

The alkoxy group preferably contains 1 to 8 carbon atoms. The alkoxy group may be substituted with an alkoxy group, etc. Examples of the (substituted) alkoxy group include methoxy, ethoxy, butoxy, and methoxyethoxy.

The alkoxycarbonyl group and the alkoxycarbonylamino group preferably contain 2 to 10 carbon atoms. Examples of the alkoxycarbonyl group are methoxyarbonyl and ethoxycarbonyl. Examples of the alkoxycarbonylamino group are methoxycarbonylamino and ethoxycarbonylamino.

The alkylthio group preferably contains 1 to 12 carbon atoms. Examples of the alkylthio group are methylthio, ethylthio, and octylthio.

The alkylsulfonyl group preferably contains 1 to 8 carbon atoms. Examples of the alkylsulfonyl group are methanesulfonyl and ethanesulfonyl.

The aliphatic amide group preferably contains 1 to 10 carbon atoms. The aliphatic amide group includes an acetamide group.

The aliphatic sulfonamide group preferably contains 1 to 8 carbon atoms. Examples of this group are methanesulfonamide, butanesulfonamide, and n-octanesulfonamide.

The aliphatic substituted amino group preferably contains 1 to 10 carbon atoms. Examples of this group are dimethylamino, diethylamino, and 2-carboxyethylamino.

The aliphatic substituted carbamoyl group preferably contains 2 to 10 carbon atoms. Examples of this group are methylcarbamoyl and diethylcarbamoyl.

The aliphatic substituted sulfamoyl group preferably contains 1 to 8 carbon atoms. Examples of this group are methylsulfamoyl and diethylsulfamoyl.

The aliphatic substituted ureido group preferably contains 2 to 10 carbon atoms and includes methylureido.

The non-aromatic heterocyclic group includes piperidino and morpholino.

The retardation increasing agent preferably has a molecular weight of 300 to 800.

Specific examples of suitable retardation increasing agents are given in JP-A-12-111914, JP-A-12-275434, and WO 00/65384.

The QWP may serve as a protective film of the polarizing film.

The polymer film as a QWP can contain an infrared (IR) absorber to have a controlled retardation at various

wavelengths. An IR absorber is preferably used in an amount of 0.01 to 5 parts, still preferably 0.02 to 2 parts, particularly preferably 0.05 to 1 part, especially preferably 0.1 to 0.5 part, by weight per 100 parts by weight of the polymer. Two or more IR absorbers may be used in combination.

It is preferred for the IR absorber to show an absorption maximum in a wavelength region between 750 nm and 1100 nm, particularly between 800 nm and 1000 nm, and to have substantially no absorption in the visible region.

The IR absorber preferably includes IR absorbing dyes or pigments. IR absorbing dyes are preferred candidates. Organic IR absorbers are preferred to inorganic ones. Organic IR absorbers include cyanine compounds, metal chelate compounds, aminium compounds, diimonium compounds, quinone compounds, squarylium compounds, and methine compounds. *Shikizai,* vol. 61, No. 4 (1988), pp. 215-226 and *Kagaku Kogyo* (May, 1986), pp. 43-53 furnish more information on useful IR absorbers.

From the viewpoint of IR absorption function or absorption spectrum, IR absorbing dyes developed in the field of silver halide photographic materials are excellent. Such IR absorbing dyes include dihydroperimidine squarylium dyes (see U.S. Patent 5,380,635 and Japanese Patent Application No. Hei-8-189817), cyanine dyes (see JP-A-62-123454, JP-A-3-138640, JP-A-3-211542, JP-A-3-226736, JP-A-5-313305, JP-A-6-43583, Japanese Patent Application No. Hei-7-269097, and EP 0430244), pyrylium dyes (see JP-A-3-138640 and JP-A-3-211542), diimonium dyes (see JP-A-3-138640 and JP-A-3-211542), pyrazolopyridone dyes (see JP-A-2-282244), indoaniline dyes (see JP-A-5-323500 and JP-A-5-323501), polymethine dyes (see JP-A-3-26765 and JP-A-4-190343, and EP 377961), oxonol dyes (see JP-A-3-9346), anthraquinone dyes (see JP-A-4-13654), naphthalocyanine dyes (see U.S. Patent 5,009,989), and naphtholactam dyes (see EP 568267).

The polymer film as a QWP is preferably produced by solvent casting using what we call a dope, a solution of a polymer in an organic solvent. The organic solvent of a dope preferably comprises a solvent selected from ethers having 3 to 12 carbon atoms, ketones having 3 to 12 carbon atoms, esters having 3 to 12 carbon atoms, and halogenated hydrocarbons having 1 to 6 carbon atoms. The ethers, ketones and esters may have a cyclic structure. Compounds having any two or more of an ether bond (-O-), a ketone group (-CO-), and an ester bond (-COO-) are also useful as a solvent. The organic solvent can further contain other functional groups such as an alcoholic hydroxyl group. In using an organic solvent with functional groups of two or more kinds, the carbon atom number of the solvent preferably falls within the above-described range of any of the functional groups.

The ether solvents with 3 to 12 carbon atoms include diisopropyl ether, dimethoxymethane, dimethoxyethane, 1,4-dioxane, 1,3-dioxolane, tetrahydrofuran, anisole, and phenetole. The ketone solvents with 3 to 12 carbon atoms include acetone, methyl ethyl ketone, diethyl ketone, diisobutyl ketone, cyclohexanone, and methylcyclohexanone. The ester solvents with 3 to 12 carbon atoms include ethyl formate, propyl formate, pentyl formate, methyl acetate, ethyl acetate, and pentyl acetate. The organic compounds having tow or more kinds of functional groups include 2-ethoxyethyl acetate, 2-methoxyethanol, and 2-butoxyethanol.

The halogenated hydrocarbon solvents preferably contain 1 or 2 carbon atoms, particularly one carbon atom. The halogen of the halogenated hydrocarbons is preferably chlorine. The degree of substitution of hydrogen with halogen is preferably 25 to 75 mol%, still preferably 30 to 70 mol%, particularly preferably 35 to 65 mol%, especially preferably 40 to 60 mol%. Methylene chloride is a typical halogenated hydrocarbon.

The aforementioned organic solvents can be used either individually or in combination of two or more thereof.

The dope (polymer solution) can be prepared in a general method, i.e., dissolving the polymer in the solvent at temperatures not lower than 0°C (ambient temperature or an elevated temperature) , by using usual procedures and apparatus commonly employed in solvent casting. Where a general method is followed, it is preferable to use a halogenated hydrocarbon solvent, particularly methylene chloride.

The dope preferably has a polymer concentration of 10 to 40% by weight, particularly 10 to 30% by weight. The organic solvent (main solvent) may previously contain arbitrary additives hereinafter described.

The dope is prepared by stirring the polymer and the organic solvent at ambient temperature (0 to 40°C). Pressure and heat may be applied in preparing a thick dope. Specifically, the polymer and the organic solvent are stirred in a closed pressure vessel under pressure while heating to a temperature at or above the boiling point (under ambient pressure) of the solvent and below the boiling point under the applied pressure. The heating temperature is usually 40°C or higher, preferably 60 to 200°C, still preferably 80 to 110°C.

The components may be coarsely mixed together beforehand or successively poured into a vessel. The vessel must be designed to allow stirring. The vessel may be pressurized by injecting an inert gas such as nitrogen. The vapor pressure of the solvent under heat may be utilized for pressurizing. Or, each component may be injected into the closed vessel under pressure.

Where the preparation involves heating, heating is preferably executed outside the vessel. For instance, a jacket type heating unit can be used, or a plate heater having a liquid circulated therein may be provided outside the vessel to heat the whole vessel.

It is preferred that the components be stirred with stirring blades fitted inside the vessel. The length of the stirring blade is preferably such as to reach near the vessel's wall. Each stirring blade preferably has a scraping blade

at the tip to sweep the material at the wall. The stirring vessel may be equipped with such instruments as a pressure meter and a thermometer. The components are thus dissolved in the vessel. The resulting dope is cooled and then withdrawn from the vessel, or withdrawn from the vessel and then cooled by means of a heat exchanger, etc.

What we call a low-temperature dissolution method can be applied to the dope preparation. A low-temperature dissolution method makes it possible to dissolve a polymer in an organic solvent incapable of dissolving the polymer in a conventional manner. When applied to a solvent capable of dissolving the polymer in a conventional manner, this technique is effective in obtaining a uniform solution rapidly.

A low-temperature dissolution method is carried out as follows. A polymer is slowly added to an organic solvent while stirring at room temperature to prepare a mixture which preferably has a polymer content of 10 to 40% by weight, particularly 10 to 30% by weight. In this stage, arbitrary additives hereinafter described may be added to the mixture.

The mixture is then cooled to -100 to -10°C, preferably -80 to -10°C, still preferably -50 to -20°C, particularly preferably -50 to -30°C, whereupon the mixture solidifies. The cooling can be effected in, for example, a solid carbon dioxide-methanol bath (-75°C) or a cooled diethylene glycol solution (-30 to -20°C). The cooling rate is preferably 4°C/min or higher, still preferably 8°C/min or higher, particularly preferably 12°C/min or higher. While a higher cooling rate is more desirable, a theoretical upper limit is 10,000°C/min, a technically reachable upper limit is 1000°C/min, and a practical upper limit is 100°C/min. The cooling rate as referred to is a quotient obtained by dividing a difference between the temperature at the start of cooling and the final cooling temperature by the time from the start of cooling required to reach the final cooling temperature.

The solid is heated to 0 to 200°C, preferably 0 to 150°C, still preferably 0 to 120°C, particularly preferably 0 to 50°C, whereupon the polymer dissolves in the organic solvent. The heating may be leaving the cooled solid to stand at room temperature or applying heat in a hot bath. The heating rate is preferably 4°C/min or higher, still preferably 8°C/min or higher, particularly preferably 12°C/min or higher. While a higher heating rate is more desirable, a theoretically reachable heating rate is 10,000°C/min, a technically reachable one is 1000°C/min, and apractical upper limit is 100°C/min. The heating rate as referred to is a quotient obtained by dividing a difference between the temperature at the start of heating and the final heating temperature by the time from the start of heating required to reach the final heating temperature.

A uniform polymer solution is thus obtained. In case dissolution is insufficient, the cooling/heating cycle can be repeated. Whether dissolution is sufficient or not is judged simply by observing the appearance of the solution with the naked eye.

To carry out the low-temperature dissolution method, it is advisable to use a closed vessel to avoid water entering through condensation on cooling. Pressure application in cooling and pressure reduction in heating will shorten the dissolution time. It is desirable to use a pressure-resistant vessel in executing pressure application and reduction.

Differential scanning calorimetry on a 20 wt% methyl acetate dope of cellulose acetate (degree of acetylation: 60.9%; viscosity-average degree of polymerization: 299) prepared by the low-temperature dissolution method reveals a sol-gel pseudo-phase transition point around 33°C. The dope becomes uniform gel below this point. Accordingly, the dope should be stored above the pseudo-phase transition point, preferably at a temperature higher than the pseudo-phase transition point by about 10°C. The pseudo-phase transition point varies depending on the average degree of acetylation, the viscosity-average degree of polymerization, the dope concentration, and the organic solvent used.

A polymer film is produced by solvent casting techniques in which the dope solution is cast on a rotating drum or an endless belt as a carrier, and the solvent is evaporated to form a film. The solids content of the dope to be cast is preferably adjusted to 18 to 35%. The drum or belt surface preferably has a mirror finish. For the details of casting and drying steps of solvent casting techniques, reference can be made in U.S. Patents 2,336,310, 2,367,603, 2,492,078, 2,492,977, 2,492,978, 2,607,704, 2,739,069, and 2,739,070, British Patents 640731 and 736892, JP-B-45-4554 (The term "JP-B" as used herein means an "examined Japanese patent application"), JP-B-49-5614, JP-A-60-176834, JP-A-60-203430, and JP-A-62-115035.

The dope is preferably cast on a drum or belt carrier whose surface temperature is kept at or below 10°C. The cast film is preferably dried by exposing to air flow for at least 2 seconds. After being released from the carrier, the cast film may be passed through a drying zone where high temperature air at a temperature successively varied from 100° to 160°C is applied to the film to remove any residual solvent as taught in JP-B-5-17844. This method enables reduction of the time required from casting to release from the carrier. To implement the method it is required for the dope to gelatinize at the surface temperature of the carrier. The dope prepared according to the present invention fulfills this requirement.

The resulting polymer film preferably has a thickness of 40 to 120 μm, particularly 70 to 100 μm.

The polymer film can contain a plasticizer to have improved mechanical properties or an increased drying rate. Suitable plasticizers include phosphoric esters, such as triphenyl phosphate (TPP) and tricresyl phosphate (TCP); and carboxylic esters, such as phthalic esters (e.g., dimethyl phthalate (DMP), diethyl phthalate (DEP), dibutyl phthalate (DBP), dioctyl phthalate (DOP), diphenyl phthalate (DPP), and diethylhexyl phthalate (DEHP)), citric esters (e.g., O-acetyl triethyl citrate (ATEC) and O-acetyl tributyl citrate (ATBC)), butyl oleate, methylacetyl ricinoleate, dibutyl sebacate, and various trimellitic esters. Preferred of them are phthalic esters (e.g., DMP, DEP, DBP, DOP, DPP, and DEHP), with DEP and DPP being particularly preferred. The plasticizer is preferably added in an amount of 0.1 to 25%, particularly 1 to 20%, especially 3 to 15%, by weight based on the cellulose ester.

The polymer film can contain stabilizers, such as antioxidants, peroxide decomposing agents, radical inhibitors, sequestering agents, acid scavengers, and amines. Fuller information on the stabilizers can be extracted with JP-A-3-199201, JP-A-5-1907073, JP-A-5-194789, JP-A-5-271471, and JP-A-6-107854. The stabilizer is preferably added in an amount of 0.01 to 1%, particularly 0.01 to 0.2%, by weight based on the dope. Addition of less than 0.01% produces substantially no stabilizing effect. Addition of more than 1% can cause bleeding. Butylated hydroxytoluene (BHT) is mentioned as a preferred example of stabilizers.

The polymer film is preferably subjected to orientation (stretching) treatment to have a controlled refractive indices as a QWP. i.e., nx, an in-plane refractive index in the slow axis direction; ny, an in-plane refractive index in the direction perpendicular to the slow phase axis direction; and nz, a refractive index in the thickness direction.

A polymer with a positive intrinsic birefringence has a higher refractive index in the direction of polymer chain orientation. On being stretched, such a polymer exhibits refractive indices $nx>ny>nz$. This is because the in-plane oriented polymer chains gain the x component with the least z component on being stretched. Thus, the relationship: $1 \leq (nx- nz) / (nx-ny)$ can be satisfied. In order for the polymer film to also satisfy the relationship: $(nx- nz)/(nx-ny) \leq 2$, the refractive indices are adjusted by controlling the stretch ratio in the uniaxial stretching or carrying out unbalanced biaxial stretching. More specifically, uniaxial or unbalanced biaxial stretching is carried out such that the major stretch ratio SA and the minor stretch ratio SB (in the direction perpendicular to the major stretch direction) may satisfy the relationship: $1<SA/SB \leq 3$. The stretch ratio is defined to be a stretched length divided by the original length. As far as the above relationship is satisfied, SB can be less than 1 (i.e., the film shrinks in this direction).

The stretch ratio is also adjusted such that the film may have a retardation of one-quarter wavelength for normal incidence. The biaxial stretching may be performed either simultaneously or successively.

Aroll of the QWP thus prepared and a roll of the polarizing plate are superposed on each other with the in-plane slow axis of the former and the absorption axis of the latter making an angle of substantially 45°. The polarizing plate used in the invention has its absorption axis making an angle of substantially 45° with the longitudinal direction of the roll, and the QWP used in the invention has its slow axis in substantial parallel with the longitudinal direction of the roll. In the specification, the language "an angle of substantially 45°" means an angle falling within a range of 40 to 50°, and the language "substantial parallel" means the angle falling within a range of -5° to +5°.

The angle between the in-plane slow axis of the QWP and the absorption axis of the polarizing plate is preferably 41 to 49°, still preferably 42 to 48°, particularly preferably 43 to 47°, especially preferably 44 to 46°.

A transparent protective film is preferably provided on the polarizing film on the side opposite to the side facing the QWP. The transparent protective film is preferably of transparent polymers having a transmission of 80% or higher, such as polyolefins, cellulose acetate, polycarbonate, polyarylate, polysulfone, and polyether sulfone. Commercially available transparent polymers or transparent polymer films can be utilized. It is desirable that the angle between the slow axis of the protective film and the absorption axis of the polarizing film be substantially 45°.

Bonding between the polarizing plate or the polarizing film and the QWP and bonding between the transparent protective film and the polarizing film are effected with an adhesive. The adhesive includes PVA resins (including modified PVA resins containing an acetoacetyl group, a sulfonic acid group, a carboxyl group, an alkoxy group, etc.) andboron compound aqueous solutions, with PVA resins, being preferred. The adhesive is preferably applied to a dry thickness of 0.01 to 10 μm, particularly 0.05 to 5 μm.

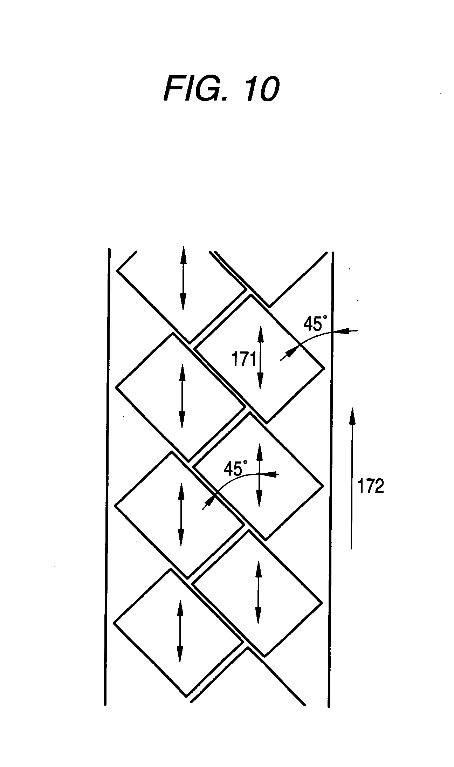

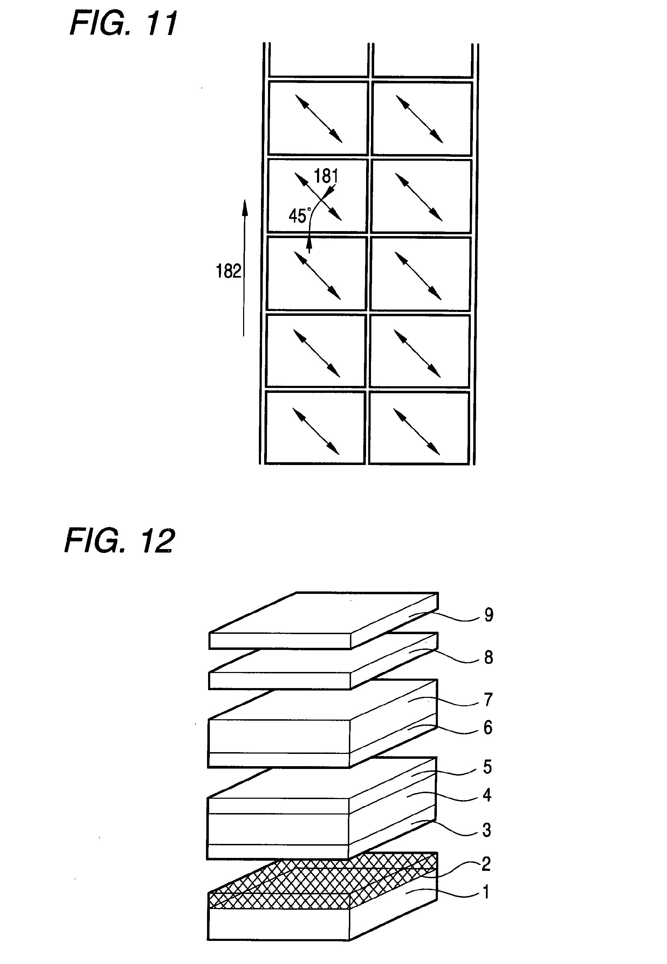

Fig. 10 shows a blanking configuration of a polarizing plate in a conventional manner, and Fig. 11 a blanking configuration of a roll of a laminate obtained by bonding a roll of a QWP and a roll of the polarizing plate of the invention. A conventional polarizing plate has its absorption axis 171 (i.e., stretching axis) agreeing with the longitudinal direction 172 as illustrated in Fig. 10, while the polarizing plate of the invention has its absorption axis 181 (i.e., stretching axis) 45° slanted from the longitudinal direction 182 as shown in Fig. 11. Since this oblique angle agrees with the angle that should be made between the absorption axis of the polarizing plate and the longitudinal direction of the QWP in bonding them, it is no more necessary to blank at least one of a polarizing plate and a QWP into cut sheets and then bonding them together for every cut sheet. Moreover, as is understood from Fig. 11, since the laminate of the polarizing plate and the QWP is cut straight along the longitudinal direction, it is possible to slit the laminate in the longitudinal direction instead of blanking or punching, which will bring marked improvement of productivity.

[IV] Optical compensator

An optical compensator can be provided between the liquid crystal cell and the QWP to reduce viewing angle dependency of display contrast and color without impairing the normal viewing angle contrast. A preferred optical compensator which is disposed between the liquid crystal cell and the polarizing plate is composed of a transparent substrate and an optically anisotropic layer made of discotic molecules and exhibits an absolute retardation in the off-normal directions. It is preferred that the transparent substrate of the compensator has an optic axis in its normal and satisfies the following condition:

$$20 \leq [(nx+ny)/2-nz] \times d_2 \leq 400$$

where nx and ny are the in-plane main refractive indices; nz is the main refractive index in the thickness direction; and $d_2$ is the thickness (nm) of the substrate. It is preferred that the disc plane of the discotic molecules is tilted with respect to the transparent substrate plane at an angle varying in the thickness direction of the optically anisotropic layer. An alignment layer is preferably provided between the transparent substrate and the optically anisotropic layer. The optical compensator sheet disclosed in JP-A-9-197397 can be made use of.

[V] Antireflection layer

Antireflection layers commonly employed in various image displays, such as LCDs, plasma display panels, and electroluminescence displays, can be used in the LCD of the present invention. The antireflection layer is preferably provided as an outermost layer of the LCD.

Multilayered antireflection layers, which are stacks of transparent metal oxide films, have generally been used in the fields of displays. The transparent metal oxide films are formed by chemical vapor deposition (CVD) or physical vapor deposition (PVD), particularly vacuum deposition (a kind of PVD techniques). A particulate antireflective coating formed by applying fine inorganic particles instead of vapor deposition is also usable.

The antireflection layer having microvoids and a finely particulate inorganic substance disclosed in JP-B-60-59250 can be used. This layer is formed by wet coating followed by treatment with activated gas to form microvoids.

The antireflection layer having a substrate and a stack of a high-refractive layer and a low-refractive layer which is disclosed in JP-A-59-50401 can be used. A medium-refractive layer may be provided between the substrate and the high-refractive layer. The low-refractive layer is formed by wet coating with a polymer or inorganic fine particles.

The antireflection layer comprising two or more kinds of ultrafine particles (e.g., $MgF_2$ and $SiO_2$) in a mixing ratio varied in the thickness direction which is disclosed in JP-A-2-245702 can be used. The refractive index varies with the mixing ratio variation to exhibit the same optical properties as with the stack of a high-refractive layer and a low-refractive layer of JP-A-59-50401. The ultrafine particles are bound with $SiO_2$ generated by pyrolysis of ethyl silicate. Pyrolysis of ethyl silicate involves combustion of the ethyl moiety, which evolves carbon dioxide and water vapor, which release from the layer to leave interstices between the ultrafine particles as illustrated in Fig. 1 of JP-A-2-245702.

The antireflection layer containing inorganic fine powder comprising porous silica and a binder is also useful.

An antireflection film comprising a cellulose acylate film substrate and a low-refractive layer whose refractive index is lower than that of the substrate can be used as well. The cellulose acylate substrate is prepared by casting a dope solution of a cellulose acylate in a solvent which is substantially free from a halogenated hydrocarbon solvent and comprises at least a solvent selected from the group consisting of ethers having 2 to 12 carbon atoms, ketones having 3 to 12 carbon atoms, and esters having 2 to 12 carbon atoms.

[VI] R-LCD

Fig. 12 schematically shows a basic structure of an R-LCD. The R-LCD of Fig. 12 comprises, from bottom to top, a lower substrate 1, a reflective electrode 2, a lower alignment layer, a liquid crystal layer 4, an upper alignment layer 5, a transparent electrode 6, an upper substrate 7, a QWP 8, and a polarizing plate 9. The lower substrate 1 and the reflective electrode 2 constitute a reflective plate. The lower and upper alignment layer 3 and 5 and the liquid crystal layer 4 constitute a liquid crystal cell.

For full color display, a color filter is provided. A color filter is preferably inserted between the reflective electrode 2 and the lower alignment layer 3 or between the upper alignment layer 5 and the transparent electrode 6.

The reflective electrode 2 may be replaced with a combination of a transparent electrode and a reflective plate. A metal plate is preferably used as a reflective plate. It is desirable that the surface of the reflective plate be provided with such an uneven structure as disclosed in Japanese Patent 275620. A reflective plate with a smooth surface is liable to allow only specular reflection components to be reflected, making the viewing angle narrower. Where the reflective plate has a smooth surface, a light diffuser film may be provided on either side of the linear polarizing film instead of making an uneven structure on the reflective plate.

An optical compensator, if used, is preferably provided between the upper substrate 7 and the QWP 8. An antireflection layer, if used, is preferably provided on the outer side of the polarizing plate 9.

The retardation (Re) of the liquid crystal cell, which is represented by $|\Delta n_1 \times d_1|$, where $\Delta n_1$ is the birefringence of the liquid crystal layer; and $d_1$ is the thickness of the liquid crystal layer, is usually 300 to 31,000 nm. The retardation

of a bend alignment cell is usually 700 to 2000 nm, preferably 800 to 1800 nm. The retardation of an HAN mode cell is usually 350 to 1000 nm, preferably 400 to 900 nm.

## EXAMPLES

The present invention will now be illustrated in greater detail with reference to Examples, but it should be understood that the invention is not construed as being limited thereto. Unless otherwise noted, all the percents and parts are by weight.

### EXAMPLE 1

Preparation of HAN mode cell:

A polyimide film was provided on a glass substrate with an ITO electrode and rubbed to form an alignment layer. SiO was vacuum deposited on another glass substrate with an ITO electrode to form an alignment layer. The two glass substrates were bonded at a gap of 5 μm with the alignment layers facing each other to make a cell. Liquid crystal ZLI-1132 from Merck (Δn=0.1396) was injected into the cell to prepare an HAN mode liquid crystal cell. The retardation (Re) of the liquid crystal layer was 698 nm. Preparation of polarizing plate:

A PVA film was immersed in an aqueous solution containing 2.0 g/l of iodine and 4.0 g/l of potassium iodide at 25°C for 240 seconds. The iodine-doped PVA film was then immersed in an aqueous solution of 10 g/l of boric acid at 25°C for 60 seconds. The film was led to a tenter frame shown in Fig. 5 and transversely stretched 5.3 times. At the position where the stretch ratio reached 5.3, the tenter frame bent as illustrated in Fig. 5. From the bend, the transversely stretched film further traveled while shrinking with its width fixed in a drying atmosphere at 80°C and then released from the tenter frame. The water content of the PVA film before being stretched was 31%, and that after the drying was 1.5%.

The difference in traveling speed between the clips on both sides was smaller than 0.05%. The angle between the centerline of the film led into the tenter frame and that of the film forwarded to the next step was 46°. The difference |L1-L2| was 0.7 m, and W was 0.7 m. Accordingly, |L1-L2|=W. The substantial stretching direction at the tenter outlet, Ax-Cx, had an oblique angle of 45° with respect to the centerline 62 of the film to be sent to the next step. There was observed no wrinkles nor distortion in the film at the outlet of the tenter frame.

A cellulose triacetate (CTA) film having its both sides saponified (Fujitack, available from Fuji Photo Film Co., Ltd.; retardation: 3.0 nm) was stuck to one side of the resulting polarizing film via a 3% aqueous solution of PVA (PVA-117H, available from Kurary Co., Ltd.), and the laminate was dried at 80°C to obtain a polarizing plate with an effective width of 650 mm.

The resulting polarizing plate had an absorption axis oblique to its longitudinal direction with an angle of 45°. The polarizing plate had a transmission of 43.7% and a degree of polarization of 99.97% at a wavelength of 550 nm. The slow axis of the protective film was parallel with the longitudinal direction.

Preparation of QWP:

A dope was prepared by mixing 120 parts of cellulose acetate having an average degree of acetylation of 59.0%, 9.36 parts of triphenyl phosphate, 4.68 parts of biphenyldiphenyl phosphate, 1.00 part of a retardation increasing agent of formula shown below, 543.14 parts of methylene chloride, 99.35 parts of methanol, and 19.87 parts of n-butanol at room temperature.

Retardation increasing agent:

The dope was cast on a glass plate and dried at room temperature for 1 minute and then at 45°C for 5 minutes. The residual solvent content after the drying was 30%. The cellulose acetate cast film was stripped from the glass plate, cut to size, and stretched at 130°C in a direction parallel to the casting direction. During the stretching, the film was let to shrink in the direction perpendicular to the stretching direction. The stretched film was dried at 120°C for 30 minutes in the gripped state and then released. The residual solvent content after the stretching and drying was 0.1%.

The resulting film of roll form had a thickness of 101 μm. The retardation (Re) of the film measured with an ellipsometer M-150, supplied from JASCO Corp., was 119.3 nm, 137.2 nm, and 142.7 nm at a wavelength of 450 nm, 550 nm, and 590 nm, respectively. These values prove that the film achieves quarter wavelength retardation over a broad range of wavelength.

Further, the in-plane refractive index nx in the slow axis direction, the in-plane refractive index ny in the direction perpendicular to the slow axis, and the refractive index nz in the thickness direction were obtained from the results of refractive index measurement with an Abbe refractometer and measurement of angle dependency of retardations. As a result, (nx-nz)/(nx-ny) was found to be 1.60.

Bonding of polarizing plate and QWP:

The non-protected side of the polarizing plate in roll form and the QWP in roll form were bonded by roll-to-roll lamination. The roll of the laminate was cut to rectangles measuring 233 mm by 310 mm as shown in Fig. 11 to obtain cut sheets of the laminate in which the absorption axis of the polarizing plate was 45° oblique to the sides. The areal cutting efficiency was 91.5%. The laminate had a thickness of 200 μm.

Preparation of R-LCD:

The HAN mode liquid crystal cell was adhered to a commercially available reflective plate, and the QWP side of the polarizing plate/QWP laminate was adhered to the opposite side of the cell to assemble an R-LCD.

COMPARATIVE EXAMPLE 1

An HAN mode liquid crystal cell and a QWP were prepared in the same manner as in Example 1. A commercially available iodine-based polarizing plate HLC2-5618, available from Sanritz Corp. (width: 650 mm), was used.

Bonding of polarizing plate and QWP:

The polarizing plate was cut to rectangles measuring 233 mm by 310 mm having an absorption axis at an oblique angle of 45° to the sides. The areal cutting efficiency was 64.7%. The QWP was cut to rectangles of the same size. A cut piece of the polarizing plate and a cut piece of the QWP were bonded to make a laminate having a thickness of 280 μm.

Preparation of R-LCD:

A commercially available reflective plate, the HAN mode cell, and the polarizing plate/QWP laminate were assembled into an R-LCD.

The R-LCDs prepared in Example 1 and Comparative Example 1 were compared in black display quality. The black display of Comparative Example 1 was tinged with blue and inferior in display quality. Example 1 was also superior

to Comparative Example 1 in terms of the labor of preparing a polarizingplate/QWP laminate, the yield of the polarizing plate, and the thickness of the laminate.

EXAMPLE 2

Preparation of antireflection film:

(1) Preparation of cellulose triacetate (CTA) solution for inner layer

The components shown below except CTA powder were put in a 20 liter volume stainless steel tank equipped with stirring blades. CTA powder described below was slowly added thereto while stirring well to make a mixture weighing 10 kg. After the addition, the mixture was left to stand at room temperature (25°C) for 3 hours to have the CTA swollen. Themethylene chloride, methanol, and n-butanol used as solvents all had a water content of not more than 0.2%.

Component of CTA solution:

| Component | Amount |
|---|---|
| CTA powder having an average particle size of 2 mm (degree of substitution: 2.83; viscosity-average degree of polymerization: 320; water content: 0.4%; viscosity of 6% solution in methylene chloride: 305 mPa·s) | 20 parts |
| Methylene chloride | 54.4 parts |
| Methanol | 10.2 parts |
| n-Butanol | 3.4 parts |
| Dipentaerythritol hexaacetate | 6 parts |
| Triphenyl phosphate | 6 parts |
| Fine silica powder (particle size: 20 nm) | 0.1 part |
| (2,4-Bis-(n-octylthio)-6-(4-hydroxy-3,5-di-t-butyla nilino)-1,3,5-triazine | 0.1 part |
| 2-(2'-Hydroxy-3',5'-di-t-butylphenyl)-5-chlorobenzo triazole | 0.1 part |
| 2- (2'-Hydroxy-3',5'-di-t-amylphenyl)-5-chlorobenzotriazole 0.1 part | |
| $C_{12}H_{25}OCH_2CH_2O\text{-}P(=O)\text{-}(OK)_2$ | 0.05 part |

(2) Preparation of CTA dope for inner layer

The CTA solution prepared in (1) above, being delivered by a screw pump, was passed through a heating zone having a temperature of 180°C and a pressure of 1 MPa for a retention time of 3 minutes and then cooled to 50°C. The solution was filtered through filter paper having an absolute filtration rating of 0.01 mm (#63, available from Toyo Roshi Kaisha, Ltd.) to prepare a CTA dope for inner layer.

(3) Preparation of CTA dope for outer layer

A CTA dope for outer layer was prepared in the same manner as for that for inner layer, except for changing the proportions of CTA and methylene chloride to 19 parts and 55.4 parts, respectively.

(4) Preparation of CTA substrate

The dopes prepared in (2) and (3) above were led into a three-layer co-casting die with the dope for inner layer sandwitched in between two layers of the dope for outer layer and co-cast on a metallic carrier. The solvents were removed from the cast film through stepwise heat drying. That is, the film was dried at 70°C for 3 minutes and than at 130°C for 5 minutes on the carrier. After removed from the carrier, the film was further dried at 160°C for 30 minutes to obtain a three-layered CTA substrate having outer/inner/outer layer thicknesses of 3 μm/74 μm/3 μm (total thickness : 80 μm). Thus, a CTA substrate was successfully obtained through steps involving no use of halogenated hydrocarbon solvents.

(5) Preparation of coating composition for low-refractive layer

To 210 g of a thermally crosslinking fluorine-containing polymer JN-7228 (available from JSR Corp.; refractive index: 1.42; solid content: 6%) were added 18 g of a silica sol dispersion in methyl ethyl ketone (MEK-ST, available from Nissan Chemical Industries, Ltd.; average particle size: 10 to 20 nm; solid content: 30%) and 200 g of methyl ethyl ketone. After stirring, the mixture was filtered through a polypropylene filter having a pore size of 1 μm to prepare a coating composition for low-refractive layer.

(6) Preparation of antireflection film

The coating composition prepared in (5) was applied to the CTA substrate with a bar coater, dried at 80°C for 5 minutes, and heated at 120°C for 10 minutes to cure the polymer. There was thus obtained an antireflection film with a 0.1 μm thick low-refractive layer having a refractive index of 1.42.

Preparation of viewing angle compensating film:

In 130 g of water and 40 g of methanol was dissolved 30 g of a straight-chain alkyl-modified PVA MP-203 (available from Kurary Co., Ltd.) by stirring, and the solution was filtered through a polypropylene filter having a pore size of 30 μm to prepare a coating composition for alignment layer.
The resulting coating composition was applied to a 100 μm thick CTA film with a 0.1 μm thick gelatin subbing layer (available from Fuji Photo Film) with a bar coater, dried at 60°C, and rubbed in a direction 45° oblique to the machine direction to form a 0.5 μm thick alignment layer.
In 3.65 g of methyl ethyl ketone were dissolved 1.6 g of compound LC-1 shown below (a discotic liquid crystal compound), 0.4 g of phenoxydiethylene glycol acrylate M-101 (available from Toagosei Co., Ltd.), 0.05 g of cellulose acetate butyrate CAB531-1 (available from Eastman Chemical), and 0.01 g of a photopolymerization initiator Irgacure 907 (available from Ciba-Geigy, Ltd.), and the solution was filtered through a polypropylene filter having a pore size of 1 μm to prepare a coating composition for optically anisotropic layer. LC-1:

$$R = -C(=O)-C_6H_4-O-(CH_2)_4-O-C(=O)-CH=CH_2$$

RO OR RO OR RO OR

The coating composition for optically anisotropic layer was applied to the alignment layer with a bar coater, and the coating film was dried at 120°C and heated for 3 minutes for aging to align the discotic molecules. While being kept at 120°C, the coating film was cured by irradiation with 300 mJ/cm$^2$ of ultraviolet rays at an illuminance of 400 mW/cm$^2$ by use of a 160 W/cm air-cooled metal halide lamp (from Eye Graphics Co., Ltd.) to form a viewing angle compensating film having a 1.8 μm thick optically anisotropic layer.
On a commercially available reflective plate for R-LCDs were stacked in the order described the HAN mode liquid crystal cell prepared in Example 1, the viewing angle compensating film prepared above, and the polarizing plate/QWP laminate with the polarizing plate up, and the antireflection film prepared above with the low-refractive layer up. The thus assembledR-LCD exhibited a satisfactory hue in its black display mode, reduced viewing angle dependency, and markedly reduced surface reflection.
The present invention provides R-LCDs with a reduced thickness while enjoying increased yield and productivity with reduced waste in the preparation of a polarizing plate and a quarter-wave plate, particularly those used for bend alignment cells, especially HAN mode cells.
The present invention also provides LCDs suffering less light leakage caused by misregistration in bonding

an unrolled quarter-wave plate and an unrolled linear polarizing plate at an oblique angle.

This application is based on Japanese Patent application JP 2001-247210, filed August 16, 2001, the entire content of which is hereby incorporated by reference, the same as if set forth at length.

## Claims

1. A liquid crystal display which comprises:

   a liquid crystal cell comprising a pair of substrates and a nematic liquid crystal layer sealed in between the pair of substrates, the substrate having an alignment layer and a transparent electrode;
   a quarter-wave plate comprising at least one polymer film; and
   a polarizing plate,

   wherein an angle of an orientation vector of the nematic liquid crystal in relation to the substrate varies with a voltage applied to the cell, and the quarter-wave plate and the polarizing plate are those cut out of a roll of a laminate obtained by bonding a roll of a quarter-wave plate and a roll of a polarizing plate, an absorption axis of which makes 45° with a longitudinal direction of the polarizing plate.

2. The liquid crystal display according to claim 1, wherein the polarizing plate comprises a polarizing film and a protective film, and a slow axis of the protective film and an absorption axis of the polarizing film making an angle of substantially 45°.

3. The liquid crystal display according to claim 1 or 2, wherein the polarizing plate is prepared by gripping both edges of a continuously fed polyvinyl alcohol film with gripping means, moving the gripping means in a longitudinal direction of the film while giving tension to the film thereby stretching the film.

4. The liquid crystal display according to claim 3, wherein the polarizing plate is prepared by:

   stretching a continuously fed polyvinyl alcohol under a condition that a track length L1 of one of the gripping means on one edge of the film from a substantial gripping starting position to a substantial release position, a track distance L2 of the other of the gripping means on the other edge of the film from a substantial gripping starting position to a substantial release position, and a distance W between the two substantial release positions satisfy the following relationship (1):

   $$|L2-L1| > 0.4W \qquad (1)$$

   and that the polyvinyl alcohol film while being stretched has a volatile fraction of 5% or more and exhibits self-supporting properties as a film; and
   shrinking the stretched film so as to reduce the volatile fraction.

5. The liquid crystal device according to claim 4, wherein the polarizing plate is prepared by stretching a polyvinyl alcohol film with a volatile fraction of 10% or more to a stretch ratio of 2 to 10 and shrinking the stretched film to a shrinkage percentage of 10%, and a transmission axis of thepolarizingplatemakes 35° to 55° with a longitudinal direction of the film.

6. The liquid crystal display according to claim 1 or 2, which further comprises an optical compensator so that the liquid crystal cell, the optical compensator and the polarizing plate are in that order.

7. The liquid crystal display according to claim 1 or 2, which further comprises an antireflection layer.

8. The liquid crystal display according to claim 1 or 2, which is a transmissive liquid crystal display, a reflective liquid crystal display or a transflective liquid crystal display.

9. An organic light-emitting element display comprising:

   a substrate;

a transparent electrode;
at least one organic compound layer comprising a light-emitting layer;
a back plate;
a quarter-wave plate comprising at least one polymer film; and
a polarizing plate,

wherein the quarter-wave plate and the polarizing plate are those cut out of a roll of a laminate obtained by bonding a roll of a quarter-wave plate and a roll of a polarizing plate, an absorption axis of which makes 45° with a longitudinal direction of the polarizing plate.

**10.** A method for making a liquid crystal display which comprises: a liquid crystal cell comprising a pair of substrates and a nematic liquid crystal layer sealed in between the pair of substrates, the substrate having an alignment layer and a transparent electrode; a quarter-wave plate comprising at least one polymer film; and a polarizing plate, wherein an angle of an orientation vector of the nematic liquid crystal in relation to the substrate varies with a voltage applied to the cell, the method comprising:

bonding a roll of a quarter-wave plate and a roll of a polarizing plate with an absorption axis of the polarizing plate making 45° with a longitudinal direction of the resulting laminate;
cutting the laminate to size; and
bonding a quarter-wave plate side of the cut sheet of the laminate to the liquid crystal cell.

**11.** The method according to claim 10, further comprising:

forming the polarizing plate which comprises a polarizing film and a protective film,

wherein a slow axis of the protective film and an absorption axis of the polarizing film making an angle of substantially 45°.

**12.** The method according to claim 10 or 11, further comprising:

gripping both edges of a continuously fed polyvinyl alcohol film with gripping means;
moving the gripping means in a longitudinal direction of the film while giving tension to the film thereby stretching the film so as to prepare the polarizing plate.

**13.** The method according to claim 10 or 11, further comprising:

gripping both edges of a continuously fed polyvinyl alcohol film with gripping means;
stretching a continuously fed polyvinyl alcohol under a condition that a track length L1 of one of the gripping means on one edge of the film from a substantial gripping starting position to a substantial release position, a track distance L2 of the other of the gripping means on the other edge of the film from a substantial gripping starting position to a substantial release position, and a distance W between the two substantial release positions satisfy the following relationship (1):

$$|L2-L1| > 0.4W \qquad (1)$$

and that the polyvinyl alcohol film while being stretched has a volatile fraction of 5% or more and exhibits self-supporting properties as a film; and
shrinking the stretched film so as to reduce the volatile fraction.

**14.** The method according to claim 10 or 11, further comprising:

stretching a polyvinyl alcohol film with a volatile fraction of 10% or more to a stretch ratio of 2 to 10; and
shrinking the stretched film to a shrinkage percentage of 10% to prepare the polarizing plate, a transmission axis of which makes 35° to 55° with a longitudinal direction of the film.

**15.** The method according to claim 10 or 11, further comprising:

disposing an optical compensator so that the liquid crystal cell, the optical compensator and the polarizing plate are in that order.

**16.** The method according to claim 10 or 11, further comprising: disposing an antireflection layer.

**17.** The method according to claim 10 or 11, wherein the liquid crystal display is a transmissive liquid crystal display, a reflective liquid crystal display or a transflective liquid crystal display.

**18.** A method for making an organic light-emitting element display which comprises: a substrate; a transparent electrode; at least one organic compound layer comprising a light-emitting layer; a back plate; a quarter-wave plate comprising at least one polymer film; and a polarizing plate, the method comprising:

bonding a roll of a quarter-wave plate and a roll of a polarizing plate, an absorption axis of which makes 45° with a longitudinal direction of the polarizing plate so as to obtain a roll of a laminate; and
cutting out of the roll of a laminate.

## FIG. 1

17
18
14a
16
16
13
12
13
13
14b
11
15°
15°


## FIG. 2

20
26a
26a
27
24a
28a
26a
28a
22a
23
28b
28b
22b
26b
24b
21
26b
26b
29°
29°

FIG. 3

34
35°
31
36
33a
38
32
38
33b

FIG. 4

X
65
61
(a)
(b)
(c)
(67)
(67')
B1
A1
A2
A3
A4
A5
C1
C2
C3
C4
C5
63
An
Cn
64
Ax
Ay
Cx
(68')
θ
90°
W
|L1 - L2|
62
68
66
Y

FIG. 5

X
75
(a)
(b)
73
74
(c)
76
Y

FIG. 6

FIG. 7
X
85
(a)
84
(b)
83
(c)
86
Y

X
95
(a)
(b)
(c)
94
93
Y
96

FIG. 8

FIG. 9

(a)
(b)
(c)
103
104
105
106
X
Y

*FIG. 10*

45°
171
45°
172

FIG. 11

181
45°
182

FIG. 12

9
8
7
6
5
4
3
2
1